# EUROPÄISCHE PATENTSCHRIFT

(11) **EP 0 947 056 B1**
(45) Veröffentlichungstag und Bekanntmachung des Hinweises auf die Patenterteilung: **08.08.2001**
(21) Anmeldenummer: 97952910.4
(22) Anmeldetag: 10.12.1997
(51) Int. Cl.: H04B 1/713, H04L 12/64

(54) **VERFAHREN ZUM ÜBERTRAGEN VON DATENPAKETEN**
METHOD FOR TRANSMISSION OF DATA PACKETS
PROCEDE DE TRANSMISSION DE PAQUETS DE DONNEES

(30) Priorität: 12.12.1996 DE 19651707
(43) Veröffentlichungstag der Anmeldung: 06.10.1999
(73) Patentinhaber: Airdata Wiman, Inc., Naples, FL 34103 (US)
(72) Erfinder: ALTVATER, Ulrich, D-74906 Bad Rappenau (DE); BÖHMER, Stefan, D-74906 Bad Rappenau (DE)
(74) Vertreter: Dreiss, Fuhlendorf, Steimle & Becker
(86) Internationale Anmeldenummer: EP9706897
(87) Internationale Veröffentlichungsnummer: WO9826515

(56) Entgegenhaltungen:
- EP-A- 0 189 695
- EP-A- 0 523 362
- WO-A-96/20538
- DE-A- 4 407 544
- US-A- 5 349 580

## Beschreibung

Die vorliegende Erfindung betrifft ein Verfahren zum Übertragen von Datenpaketen in einem Netz von Anwenderstationen, wobei die Datenpakete über einen Satz von Kanälen im Frequenzsprungverfahren übertragen und die Kanäle dabei nach einem Frequenzsprungmuster in zeitlich nacheinander folgenden Zeitschlitzen zur Datenübertragung ausgewählt werden, und einer Anwenderstation Zeitschlitze nach Bedarf zugeordnet werden, in denen sie sendeberechtigt ist.

Ein derartiges Verfahren ist aus der DE 44 07 544 A1 bekannt. Als weiterer Stand der Technik wird auf die WO-A-9620538 und die EP-A-189695 verwiesen.

Das bekannte Verfahren dient zur Übertragung von Datenpaketen in einem Zusatznetz, das über Frequenzkanäle sendet, die zumindest zum Teil bereits in einem bestehenden Basisnetz zur digitalen Daten- und/oder Sprachübertragung verwendet werden. Bei diesem Verfahren wird in einem ersten Schritt ein von dem Basisnetz gerade nicht belegter Prequenzkanal ermittelt, woraufhin in einem zweiten Schritt ein Datenpaket über den ermittelten Frequenzkanal übertragen wird. Diese Schritte werden nach Art einer Frequenzsprungtechnik zyklisch so lange wiederholt, bis alle Datenpakete einer Sendung übertragen wurden.

Mit dem bekannten Verfahren ist es möglich, durch die Verwendung der Frequenzsprungtechnik bestehende Kanäle besser auszunutzen, ohne daß das jeweilige Basisnetz gestört wird.

Wie in der Frequenzsprungtechnik üblich, werden die einzelnen Datenpakete nach einem Frequenzsprungmuster in zeitlich gestaffelten Zeitschlitzen über verschiedene Frequenzkanäle übertragen, wobei die Last gleichmäßig auf die zur Verfügung stehenden Kanäle verteilt wird.

Die zugrundeliegende Frequenzsprungtabelle wird hier pseudozufällig generiert, wobei die Zieladresse in die Kanalberechnung mit einfließt. Über den jeweiligen Kanal wird in einem bestimmten Zeitschlitz nur eine bestimmte Anwenderstation angesprochen, die Zuordnung der Kanäle zu den Anwenderstationen ist dabei vorgegeben.

Die Auswahl eines gerade nicht von dem Basisnetz belegten Frequenzkanales erfolgt bei diesem Verfahren so, daß zunächst einer der mehreren Frequenzkanäle ausgewählt wird, woraufhin dann dieser ausgewählte Kanal abgehört wird, um zu überprüfen, ob das Basisnetz gerade auf diesem Frequenzkanal sendet. Wenn bei dieser Abhörung kein Signal empfangen wird, so wird davon ausgegangen, daß dieser Kanal von dem Zusatznetz verwendet werden kann.

Wenn jedoch festgestellt wird, daß der ausgewählte Kanal gerade von einem Primärnutzer benutzt wird, so verstreicht der Zeitschlitz ungenutzt, d.h. über den ausgewählten Kanal wird kein Datenpaket übertragen, um den Primärnutzer nicht zu stören.

Aus dem obigen ergibt sich, daß bei dem bekannten Verfahren den Anwenderstationen die Sendeberechtigung fest zugewiesen ist, so daß es von der Zahl der Anwenderstationen abhängt, wie häufig eine Anwenderstation innerhalb einer bestimmten Zeitspanne senden kann. Wenn einige der Anwenderstationen keinen Sendebedarf haben, kann sich der Datendurchsatz bei dem bekannten Verfahren wegen der ungenutzt verstreichenden Zeitschlitze somit stark reduzieren.

Die Zuordnung der einzelnen Kanäle des Frequenzsprungmusters zu den jeweiligen Anwenderstationen hängt folglich von der Zahl der Anwenderstationen ab. Wenn sich deren Zahl erhöht oder verringert, geht der Datendurchsatz einer einzelnen Anwenderstation entsprechend herunter oder nach oben.

Neben dem oben bereits erwähnten, in bestimmten Netzzuständen nicht optimalen Datendurchsatz weist das bekannte Verfahren somit den weiteren Nachteil auf, daß eine Datenübertragung in Echtzeit nicht immer möglich ist. Es hängt stark von der Konfiguration des Netzes von Anwenderstationen ab, in welchen Zeitabständen eine Anwenderstation seine Datenpakete übertragen kann.

Vor diesem Hintergrund ist es Aufgabe der vorliegenden Erfindung, das eingangs genannte Verfahren dahingehend weiterzubilden, daß der Datendurchsatz in dem Netz von Anwenderstationen maximiert und eine Datenübertragung in Echtzeit möglich wird.

Erfindungsgemäß wird diese Aufgabe durch das Verfahren nach dem Anspruch 1 gelöst.

Die der Erfindung zugrundeliegende Aufgabe wird auf diese Weise vollkommen gelöst.

Eine Zentralstation für ein Datenpakete übertragendes Netz von Anwenderstationen, bei dem die Datenpakete über einen Satz von Kanälen im Frequenzsprungverfahren übertragen und die Kanäle dabei nach einem Frequenzsprungmuster zeitlich nacheinander zur Datenübertragung ausgewählt werden, wobei die Zentralstation ein erstes Sende-/Empfangsteil aufweist, das ein erstes Frequenzsprungmuster abarbeitet, um Datenpakete lastabhängig zu und von den Anwenderstationen zu übertragen, ist dadurch gekennzeichnet, daß die Zentralsation ein zweites Sende-/Empfangsteil aufweist, das etwa zeitgleich ein zu dem ersten orthogonales zweites Frequenzsprungmuster abarbeitet, um Datenpakete in einem vorgebbaren Zeitraster zu übertragen.

Entsprechend ist eine Anwenderstation für ein Datenpakete übertragendes Netz von derartigen Anwenderstationen, bei dem die Datenpakete über einen Satz von Kanälen im Frequenzsprungverfahren übertragen und die Kanäle dabei nach einem Frequenzsprungmuster zeitlich nacheinander zur Datenübertragung ausgewählt werden, erfindungsgemäß dadurch gekennzeichnet, daß die Anwenderstationen dazu eingerichtet sind, zwei Frequenzsprungmuster zu speichern und wahlweise aufzurufen, um ein Datenpaket zu übertragen, wobei in dem ersten Frequenzsprungmuster Datenpakete nach Vorgabe einer Zentralstation lastabhängig übertragen werden und in dem zu dem ersten orthogonalen zweiten Frequenzsprungmuster Datenpakete in einem vorgebbaren Zeitraster übertragen werden.

Zentralstation und Anwenderstation arbeiten also dasselbe Frequenzsprungmuster ab, wobei die Zentralstation die Sendeberechtigung jeweils nach Bedarf vergibt, also lastabhängig für asynchrone Datenübertragung und mit einem festen Zeitraster für synchrone Datenübertragung.

Wenn die Zeitschlitze den Anwenderstationen nämlich nach Bedarf, also z.B. lastabhängig zugewiesen werden, kann einerseits auf wechselnde Lastzustände des Netzes flexibel reagiert werden. Eine Anwenderstation, die gerade einen hohen Übertragungsbedarf aufweist, erhält dabei nämlich mehr Zeitschlitze zugeordnet als andere Anwenderstationen, die keine oder nur wenige Daten pro Zeiteinheit zu übertragen haben. Dies ist überraschenderweise dadurch möglich, daß nicht nur - wie im Stand der Technikden Anwenderstationen Kanäle aus dem Frequenzsprungmuster zugewiesen werden, sondern daß vielmehr Zeitschlitze den Anwenderstationen zugewiesen werden, wobei sich die jeweils zur Übertragung zu verwendenden Kanäle aus dem Frequenzsprungmuster ergeben. Das Frequenzsprungmuster selbst kann dabei z.B. statisch sein oder aber aufgrund der Belegung von Kanälen durch die Primärnutzer dynamisch verwaltet werden. Dies kann jedoch unabhängig von der dynamischen Vergabe der Zeitschlitze an die Anwenderstationen erfolgen.

Dabei ist es ferner bevorzugt, wenn zumindest ein erstes, festes Zeitraster von periodisch angeordneten Zeitschlitzen einer Anwenderstation zur synchronen Übertragung von Datenpaketen zugeordnet wird, und zumindest einige der verbleibenden Zeitschlitze den Anwenderstationen dynamisch in Abhängigkeit von deren Datenaufkommen zugewiesen werden.

Hier ist weiter von Vorteil, daß nun über ein und dasselbe Frequenzsprungmuster sowohl eine synchrone als auch eine asynchrone Datenübertragung möglich ist. Eine Anwenderstation, die z.B. Sprache übertragen will, erhält ein festes Raster von Zeitschlitzen zugewiesen, wobei sich die zugeordneten Kanäle wieder aus dem jeweils aktuellen Frequenzsprungmuster ergeben. Die noch freien Zeitschlitze werden weiterhin dynamisch, also lastabhängig zugeordnet. Damit ist jetzt einerseits eine Übertragung von Sprache möglich, während andererseits in den verbleibenden Zeitschlitzen der Datendurchsatz maximiert wird, da zumindest von den verbleibenden Zeitschlitzen nur noch wenige ungenutzt verstreichen.

Andererseits ist es bevorzugt, wenn in einem ersten Frequenzsprungmuster Datenpakete nach Bedarf und zumindest in einem zu dem ersten Frequenzsprungmuster orthogonalen zweiten Frequenzsprungmuster Datenpakete in einem vorgebbaren Zeitraster synchron in dem Netz übertragen werden.

Die Erfinder der vorliegenden Anmeldung haben nämlich erkannt, daß zwischen denselben Anwenderstationen und über denselben Satz von Kanälen überraschenderweise auch zwei verschiedene Arten von Datenübertragung erfolgen können, so daß einerseits der Datendurchsatz maximiert und andererseits eine Datenübertragung in Echtzeit möglich wird.

Die asynchrone Datenübertragung mit ggf. lastabhängiger, also dynamischer Vergabe der Sendeberechtigung sorgt für eine Optimierung des Datendurchsatzes, weil gerade nicht an einer Datenübertragung interessierte Anwenderstationen vorübergehend nur wenige oder keine Zeitschlitze und damit Kanäle in dem ersten Frequenzsprungmuster belegen können, während Anwenderstationen mit hohem Datenverkehr eine höhere Anzahl von Kanälen in dem Frequenzsprungmuster zugewiesen werden können. In bestimmten Netzzuständen kann natürlich auch hier eine synchrone Datenübertragung erfolgen. Eine derartige, rein dynamische Zuweisung der Sendeberechtigung erlaubt jedoch keine ständige synchrone Datenübertragung, da andere Anwenderstationen mit schwankendem Datenaufkommen dafür sorgen würden, daß die Anwenderstation, die synchronen Datenverkehr abwickeln will, Zeitschlitze in unterschiedlichen Zeitabständen zugewiesen bekäme. Dies würde z.B. bei einer Sprachübertragung zu einem sogenannten "Stottereffekt" führen.

Die Erfinder der vorliegenden Anmeldung haben jedoch erkannt, daß durch die erfindungsgemäße Verwendung des zweiten Frequenzsprungmusters dennoch parallel zu der lastabhängigen Zuweisung der Sendeberechtigung auch ein synchroner Datenverkehr möglich ist, bei dem die Datenpakete in einem festen Zeitraster übertragen werden, der Abstand der zugewiesenen Zeitschlitze also konstant ist. Dieser Abstand ist vorgebbar, er kann also an die zu übertragende Datenmenge bzw. an deren Häufigkeit angepaßt werden. Es werden nämlich sozusagen zwei Netze zwischen denselben Anwenderstationen und über dieselben Kanäle betrieben, wobei durch noch zu beschreibende Maßnahmen dafür gesorgt wird, daß das lastabhängig optimierte Netz das andere Netz für den synchronen Datenverkehr nicht beeinträchtigt.

Durch die orthogonalen Frequenzsprungmuster wird darüber hinaus auch ein gegenseitiges Stören durch Interferenzen verhindert. Unter Orthogonalität wird hier verstanden, daß innerhalb eines jeden Zeitschlitzes die beiden Frequenzsprungmuster immer unterschiedliche Kanäle aufweisen, so daß selbst bei einem gemeinsamen Senden beider Netze innerhalb eines Zeitschitzes keine gegenseitigen Behinderungen vorkommen können.

Die Frequenzsprungmuster können dabei entweder statisch in Frequenzsprungtabellen abgelegt oder aber dynamisch mittels eines Algorithmus berechnet werden. Im folgenden wird unter "Frequenzsprungmuster" immer sowohl eine statisch abgelegte Frequenzsprungtabelle als auch ein entsprechender Algorithmus verstanden.

Das neue Verfahren kann z.B. dadurch implementiert werden, daß jede Anwenderstation ein Sende-/Empfangsteil für das erste Frequenzsprungmuster sowie ein zweites Sende-/Empfangsteil für das zweite Frequenzsprungmuster aufweist. Eine Anwenderstation kann jedoch nur ein Datenpaket z. Zt. handhaben, so daß bei Kollision dem Datenpaket, das über den Kanal aus dem zweiten Frequenzsprungmuster übertragen wird, Vorrang gegeben werden muß, damit die Synchronisation nicht verloren geht. Dabei kann es jedoch vorkommen, daß Datenpakete, die über einen Kanal des ersten Frequenzsprungmusters zu oder von der Anwenderstation übertragen werden sollen, die gerade ein synchrones Datenpaket sendet oder empfängt, verloren gehen. Wie in der Frequenzsprungtechnik üblich, wird innerhalb eines Zeitschlitzes von der sendenden Station jedoch eine Empfangsbestätigung der Zielstation erwartet, so daß ein verloren gegangenes Datenpaket bemerkt und in dem nächsten verfügbaren Zeitschlitz wiederholt wird.

Eine Anwenderstation kann darüber hinaus z.B. sowohl asynchronen als auch synchronen Datenverkehr zeitlich verschachtelt abwickeln, wobei die Zeitschlitze zwischen den fest zugeordneten Zeitschlitzen für den synchronen Datenverkehr je nach Last auch von anderen Anwenderstationen genutzt werden. Wenn mehrere Anwenderstationen synchronen Datenverkehr abwickeln, so erfolgt dies in zeitlich versetzten aber jeweils festen Rastern von Zeitschlitzen, wobei die freien Zeitschlitze wieder für asynchronen Datenverkehr zur Verfügung stehen.

Während die Kanäle in dem ersten Frequenzsprungmuster den Anwenderstationen dynamisch zugewiesen werden, um auf Laständerungen reagieren zu können, kann die Zuordnung der Kanäle in dem zweiten Frequenzsprungmuster statisch oder variabel sein, um auch Echtzeit-Datenübertragungen mit unterschiedlichen Datenaufkommen abwickeln zu können.

Demgemäß ist es bei der neuen Zentralstation bevorzugt, wenn sie ein zweites Sende-/Empfangsteil aufweist, das etwa zeitgleich ein zu dem ersten orthogonales zweites Frequenzsprungmuster abarbeitet, um Datenpakete in einem vorgebbaren Zeitraster zu übertragen.

Bei der neuen Anwenderstation ist es folglich bevorzugt, wenn sie dazu eingerichtet ist, zwei Frequenzsprungmuster zu speichern und wahlweise aufzurufen, um ein Datenpaket zu übertragen, wobei in dem ersten Frequenzsprungmuster Datenpakete lastabhängig übertragen werden und in dem zu dem ersten orthogonalen zweiten Frequenzsprungmuster Datenpakete in einem vorgebbaren Zeitraster übertragen werden.

Hier ist von Vorteil, daß bei der neuen Anwenderstation nur geringe weitere Änderungen erforderlich sind, sie muß lediglich zwei Frequenzsprungmuster speichern und von dem einen auf das andere Frequenzsprungmuster umschalten können. Die neue Zentralstation dagegen ist auf einfache Weise aus zwei zueinander vorzugsweise identischen Sende-/Empfangsteilen aufgebaut, von denen eines ständig dem ersten und das andere ständig dem zweiten Frequenzsprungmuster folgt. Da beide Frequensprungmuster zueinander orthogonal sind, kann durchaus eine Anwenderstation synchrone und die andere Anwenderstation asynchrone Daten übertragen, wobei die Zentralstation dann den synchron übertragenen Daten bei der Weiterverarbeitung den Vorrang gibt, die asynchron übertragenen Daten gehen verloren, müssen also in einem der folgenden Zeitschlitze erneut übertragen werden. Wenn jedoch keine synchrone Datenübertragung erfolgt, so wird ein zeitgleich übertragenes Datenpaket aus der asynchronen Übertragung von der Zentralstation weiterverarbeitet. Damit gehen jedoch nur dann Zeitschlitze an die synchrone Datenübertragung, wenn diese auch tatsächlich erfolgt. In Sprachpausen, in denen trotz einer bestehenden Sprachverbindung keine Datenpakete übertragen werden müssen, nutzt das neue System damit den Zeitschlitz für eine asynchrone Datenübertragung, so daß hier eine maximale Optimierung des Datendurchsatzes erreicht wird.

Allgemein ist es hier bevorzugt, wenn der Satz von Kanälen in einem Frequenzband liegt, das von Primärnutzern verwendet wird, wobei ein von dem Netz von Anwenderstationen jeweils ausgewählter Kanal vor einer möglichen Datenübertragung daraufhin überprüft wird, ob ein Primärnutzer diesen Kanal z. Zt. belegt, und in Abhängigkeit von dieser Überprüfung entweder ein Datenpaket über den ausgewählten Kanal übertragen oder der in dem jeweiligen Frequenzsprungmuster nächste Kanal zur Überprüfung und möglichen Datenübertragung ausgewählt wird.

Hier ist von Vorteil, daß das neue Verfahren im Zusammenhang mit dem aus der eingangs zitierten DE 44 07 544 A1 bekannten Overlay-Verfahren verwendet werden kann. Damit stehen für das neue Verfahren eine große Anzahl von bereits anderweitig benutzten Frequenzbändern zur Verfügung. Der Erfinder der vorliegenden Anmeldung hat nämlich erkannt, daß die Ausnutzung der Kanäle durch die Primärnutzer in der Regel so gering ist, daß ein Overlay-Netz betrieben werden kann, ohne daß einerseits die Primärnutzer gestört werden oder andererseits das Overlay-Netz einen zu geringen Datendurchsatz aufweist. Die Belegung der Kanäle durch die Primärnutzer ist sogar so gering, daß trotz der eingangs beschriebenen Überprüfung nach der Methode "listen before talking" in der Regel nur sehr wenige Zeitschlitze nicht zur Datenübertragung zur Verfügung stehen, also die Qualität einer Echtzeitübertragung negativ beeinflussen.

Besonders vorteilhaft läßt sich das neue Verfahren im Zusammenhang mit einem Verfahren zur dynamischen Verwaltung der Frequenzsprungmuster verwenden, das Gegenstand der zeitgleich eingereichten Patentanmeldung "Verfahren zum Betreiben eines Netzes von Sekundärnutzern" (Anwaltsakte: 1006P104; Anmelderin: Altvater Air Data Systems GmbH & Co. KG) ist. Bei dem dort beschriebenen Verfahren werden Kanäle, auf denen Primärnutzer nicht nur temporär sondern länger andauernd senden, aus dem Frequenzsprungmuster entfernt, so daß zyklisch nur Kanäle abgearbeitet werden, die auch tatsächlich überwiegend zur Datenübertragung zur Verfügung stehen. Diese Adaption des Frequenzsprungmusters an die aktuelle Belegungssituation der Kanäle durch die Primärnutzer erfolgt in einer Zentralstation, die das jeweils neue Frequenzsprungmuster den Anwenderstationen mitteilt.

Selbstverständlich ist es möglich, mit dem dort beschriebenen Verfahren auch zwei Frequenzsprungmuster an die Belegungssituation der Kanäle durch Primärnutzer adaptiv anzupassen und dabei ferner dafür zu sorgen, daß die veränderten Frequenzsprungmuster immer noch zueinander orthogonal sind.

Allgemein ist es bevorzugt, wenn die Zeitschlitze des ersten Frequenzsprungmusters den Anwenderstationen dynamisch in Abhängigkeit von deren Datenaufkommen zugewiesen werden.

Hier ist von Vorteil, daß sich eine einfache, lastabhängige Vergabe der Zeitschlitze sowie der zugeordneten Kanäle ergibt. Eine Anwenderstation mit höherem Datenaufkommen erhält mehr Zeitschlitze und damit auch die entsprechenden Kanäle aus dem ersten Frequenzsprungmuster zugewiesen als eine Anwenderstation mit geringem oder gar keinem Datenaufkommen.

Weiter ist es bevorzugt, wenn das Netz von Anwenderstationen eine gemeinsame Systemzeit aufweist und beide Frequenzsprungmuster zyklisch und zeitgleich so abarbeitet, daß in einem bestimmten Zeitschlitz je ein Kanal aus dem ersten und zweiten Frequenzsprungmuster zur Datenübertragung zur Verfügung steht, wobei vorzugsweise jeder Anwenderstation feste, periodisch angeordnete Zeitschlitze in dem zweiten Frequenzsprungmuster zugewiesen sind oder aber einer Anwenderstation bei Bedarf ein Satz fester, periodisch angeordneter Zeitschlitze in dem zweiten Frequenzsprungmuster zugewiesen wird.

Hier ist von Vorteil, daß beide Frequenzsprungmuster sozusagen synchron zueinander abgearbeitet werden, so daß in jedem Zeitschlitz eine gerade sendeberechtigte Anwenderstation entweder über den aktuellen Kanal aus dem ersten Frequenzsprungmuster ein asynchrones Datenpaket oder aber in dem aktuellen Kanal aus dem zweiten Frequenzsprungmuster ein synchrones Datenpaket übertragen kann. Wegen der dynamischen Zuweisung von Kanälen bzw. Zeitschlitzen in dem ersten Frequenzsprungmuster kann es sein, daß die sendeberechtigte Anwenderstation zwar ein asynchrones jedoch kein synchrones Datenpaket übertragen kann, da der gerade aktuelle Zeitschlitz nicht zu dem Satz von fest oder variabel bei Bedarf zugeordneten Zeitschlitzen in dem zweiten Frequenzsprungmuster zählt.

Mit anderen Worten, die Anwenderstationen arbeiten in der Regel die Kanäle aus dem ersten Frequenzsprungmuster ab, und nur dann, wenn der jeweils aktuelle Zeitschlitz mit dem dieser AnwenderStation zugeordneten festen Satz von Kanälen in dem zweiten Frequenzsprungmuster übereinstimmt, kann ein synchrones Datenpaket übertragen werden.

In der ersten Alternative mit der festen Zuordnung von Zeitschlitzen aus dem zweiten Frequenzsprungmuster verstreicht der jeweilige Zeitschlitz ungenutzt, wenn die Anwenderstation gerade kein synchrones Datenpaket zu übertragen hat. Bei der zweiten Alternative, also bei der variablen Zuordnung, findet diese Zuordnung überhaupt nicht statt, wenn die jeweilige Anwenderstation keine synchronen Datenpakete übertragen will, so daß diese Anwenderstation dann nur Kanäle aus dem ersten Frequenzsprungmuster abarbeitet.

Durch diese Maßnahme wird der Datendurchsatz durch das Netz optimiert, da weiter verhindert wird, daß "leere" Zeitschlitze auftreten können.

Ferner ist bevorzugt, wenn eine Anwenderstation eine Zentralstation ist, die zwei Sende-/Empfangsteile aufweist, von denen in einem bestimmten Zeitschlitz der eine auf den zugeordneten Kanal des ersten Frequenzsprungmusters und der andere auf den zugeordneten Kanal des zweiten Frequenzsprungmusters eingestellt wird.

Diese Maßnahme ist insbesondere bei einem hierarchischen Netz von Vorteil, weil nämlich die Zentralstation so zu jedem Zeitpunkt einer möglichen Datenübertragung sowohl asynchrone als auch synchrone Datenpakete senden bzw. empfangen kann. In der Regel erfolgt bei hierarchischen Netzen der Datenverkehr zwischen zwei Anwenderstationen immer über die Zentralstation, so daß eine sendeberechtigte Anwenderstation ihr Datenpaket immer zu der Zentralstation überträgt. Da die Zentralstation jetzt sowohl synchrone als auch asynchrone Daten empfangen kann, ist keine weitere Abstimmung zwischen der sendeberechtigten Anwenderstation und der Zentralstation erforderlich, so daß auch hierdurch der Datendurchsatz in dem Netz erhöht wird.

In diesem Zusammenhang weist jede Anwenderstation vorzugsweise einen Sende-/Empfangsteil auf, der wahlweise auf einen Kanal aus dem ersten oder zweiten Frequenzsprungmuster eingestellt wird.

Hier ist von Vorteil, daß die Anwenderstationen deutlich einfacher aufgebaut sein können als die Zentralstation. Die Anwenderstation muß lediglich in der Lage sein, beide Frequenzsprungmuster zu verwalten.

Weiter ist es bevorzugt, wenn die Anwenderstation dem ersten Frequenzsprungmuster folgt und nur bei eigener Sendeberechtigung auf das zweite Frequenzsprungmuster umschaltet.

Hier ist von Vorteil, daß die Anwenderstation ihren Sende/Empfangsteil nur dann auf einen Kanal aus dem zweiten Frequenzsprungmuster umschaltet, wenn sie über diesen Kanal auch sendeberechtigt ist. Wie es oben bereits erwähnt wurde, kann diese Sendeberechtigung fest vorgegeben oder aber wahlweise zugeordnet werden. In der übrigen Zeit folgt die Anwenderstation dem ersten Frequenzsprungmuster und kann bei entsprechender Zuweisung jederzeit asynchrone Datenpakete übertragen.

Ferner ist es dabei bevorzugt, wenn die Anwenderstation nur dann auf das zweite Frequenzspektrum umschaltet, wenn für sie eine synchrone Datenübertragung ansteht.

Hier ist von Vorteil, daß die Zahl der ungenutzten Zeitschlitze weiter verringert wird, nur wenn die Anwenderstation selbst ein synchrones Datenpaket aussenden will oder aber ein synchrones Datenpaket erwartet, schaltet sie auf einen Kanal aus dem zweiten Frequenzsprungmuster um.

Dabei ist es dann bevorzugt, wenn die Zentralstation der Anwenderstation eine synchrone Datenübertragung über einen Kanal aus dem ersten Frequenzsprungmuster ankündigt.

Hier ist von Vorteil, daß die Anwenderstation so lange im Ablauf des ersten Frequenzsprungmusters bleibt, wie sie selbst keine synchrone Datenübertragung starten will. Wenn von der Zentralstation eine synchrone Datenübertragung zu einer Anwenderstation vorgenommen werden soll, so wird dies der Anwenderstation zuvor über einen Kanal aus dem ersten Frequenzsprungmuster mitgeteilt, woraufhin die Anwenderstation dann den ihr fest zugeordneten oder variabel zugewiesenen Satz von zeitlich äquidistanten Zeitschlitzen abarbeitet.

Zusammengefaßt werden bei dem neuen Verfahren überwiegend Datenpakete lastabhängig zwischen den Anwenderstationen und der Zentralstation übertragen, wobei die Zentralstation in Abhängigkeit von dem jeweiligen Datenaufkommen den einzelnen Anwenderstationen Kanäle und damit Zeitschlitze aus dem ersten Frequenzsprungmuster zuweist. Eine Anwenderstation mit einem höheren Datenaufkommen erhält häufiger eine Sendeberechtigung über einen Kanal als eine Anwenderstation mit geringem Datenaufkommen. Die zeitliche Abfolge der einzelnen zugewiesenen Zeitschlitze ist dabei beliebig.

Soll jetzt für eine Anwenderstation eine synchrone Datenübertragung, also z.B. eine Übertragung von Sprache erfolgen, so muß diese Anwenderstation in einem vorgegebenen oder vorzugebenden, äquidistanten Muster von Zeitschlitzen immer wieder einen Kanal aus dem ersten oder aber dem zweiten Frequenzsprungmuster belegen. Über diesen Kanal kann sie dann Sprache senden oder empfangen. Da die Zeitschlitze äquidistant sind, wird ein Stottereffekt vermieden.

Die Zentralstation ist vorzugsweise so aufgebaut, daß sie sowohl dem ersten als auch dem zweiten Frequenzsprungmuster folgt, also in jedem Zeitschlitz Datenpakete sowohl synchron als auch asynchron senden bzw. empfangen kann. Dies ist erforderlich, weil nicht im voraus feststeht, ob tatsächlich über einen Kanal aus dem zweiten Frequenzsprungmuster auch ein synchrones Datenpaket übertragen wird. Daher kann eine andere Anwenderstation in demselben Zeitschlitz ein asynchrones Datenpaket übertragen, das von der Zentralstation jedoch ignoriert wird, wenn gleichzeitig ein synchrones Datenpaket von einer anderen Anwenderstation übertragen wird.

Hierdurch wird der gesamte Datendurchsatz durch das Netz von Anwenderstationen stark erhöht, denn die Kanäle aus dem zweiten Frequenzsprungmuster werden tatsächlich nur dann verwendet, wenn auch eine Übertragung von synchronen Datenpaketen erfolgt. Zu allen übrigen Zeiten erfolgt eine lastabhängig optimierte Übertragung von asynchronen Datenpaketen über Kanäle aus dem ersten Frequenzsprungmuster.

Dieses neue Verfahren ermöglicht somit eine Optimierung bei der Ausnutzung von zur Verfügung stehenden Kanalkapazitäten auch in solchen Netzen, in denen eine Störung der Primärnutzer durch die Anwenderstationen mit sehr großer Sicherheit vermieden werden muß.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: ein schematisches Beispiel für ein Netz von Anwenderstationen;
- Fig. 2: ein schematisches Beispiel für ein von dem Netz aus Fig. 1 verwendetes Frequenzsprungmuster;
- Fig. 3: ein schematisches Beispiel eines Frequenzspektrums eines Basisnetzes, dem das Netz aus Fig. 1 überlagert wird;
- Fig. 4: die Aufteilung eines Zeitschlitzes des Netzes aus Fig. 1 auf die verschiedenen Operationen;
- Fig. 5: eine detailliertere Darstellung einiger Anwenderstationen des Netzes aus Fig. 1; und
- Fig. 6: ein schematisches Beispiel für von dem Netz aus Fig. 5 verwendete Frequenzsprungmuster.

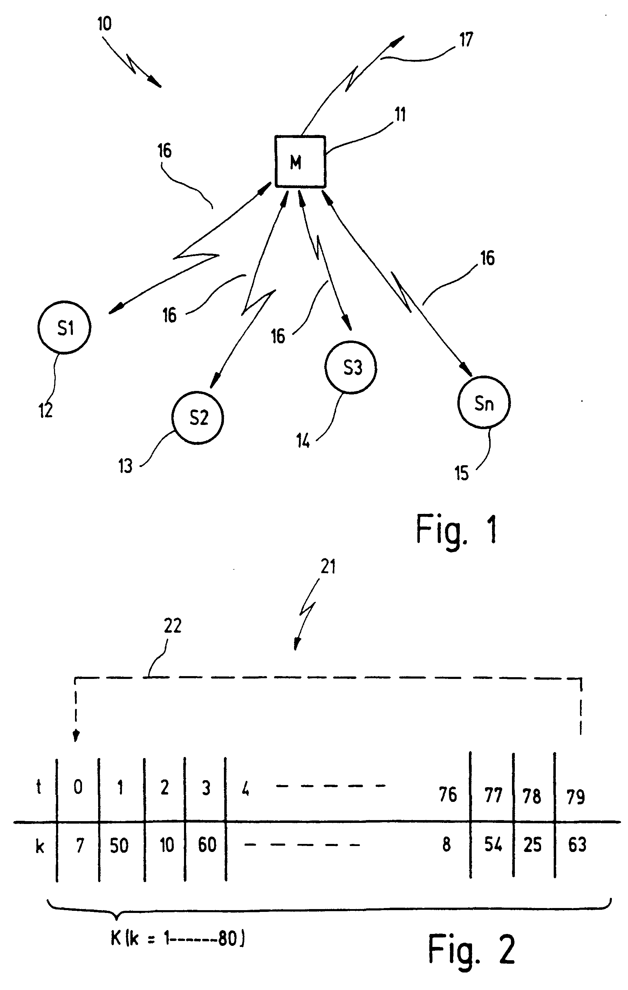

In Fig. 1 ist schematisch ein Netz 10 gezeigt, das eine Zentralstation 11 sowie mehrere Anwenderstationen 12, 13, 14 und 15 umfaßt. Die Anwenderstationen 12, 13, 14 und 15 sind über interne Funkverbindungen 16 mit der Zentralstation 11 verbunden, die wiederum über eine externe Funkverbindung 17 mit weiteren Stationen verbunden ist.

Das Netz 10 ist hierarchisch strukturiert, die Anwenderstationen 12, 13, 14, 15 können lediglich über die Zentralstation 11 miteinander kommunizieren. Auch der Kontakt zu weiteren, externen Stationen erfolgt über die Zentralstation 11.

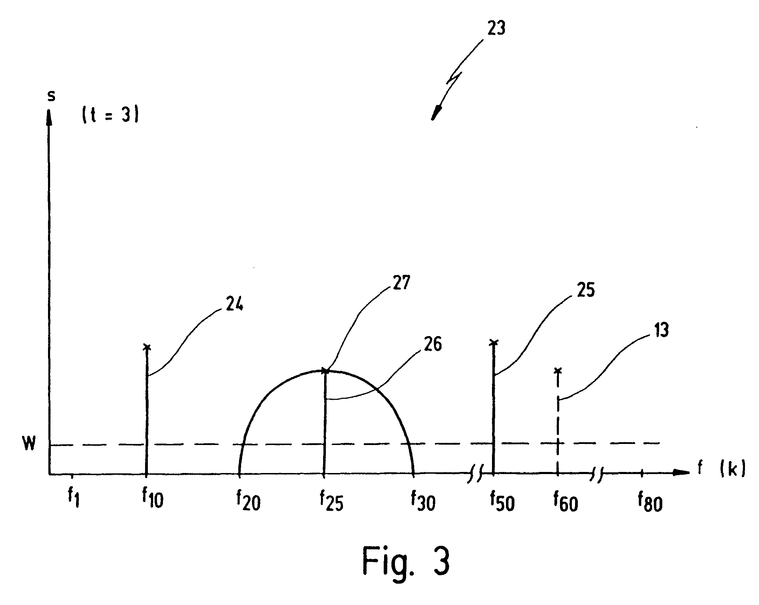

Das Netz 10 verwendet für die Datenübertragung Kanäle eines im Zusammenhang mit Fig. 3 näher beschriebenen Frequenzspektrums im Frequenzsprungverfahren. Hierzu ist sowohl in der Zentralstation 11 als auch in den Anwenderstationen 12, 13, 14, 15 jeweils ein in Fig. 2 gezeigtes Frequenzsprungmuster 21 abgespeichert, das zyklisch durchlaufen wird, wie der Pfeil 22 andeutet.

In dem gezeigten Beispiel ist in dem Frequenzsprungmuster 21 ein Satz K(k=1...80) von 80 Kanälen statistisch verteilt so angeordnet, daß zwischen zwei aufeinanderfolgenden Kanälen K(k) ein möglichst großer Sprungabstand vorhanden ist. Dadurch wird sichergestellt, daß die Phasenlagen von zwei aufeinanderfolgenden Kanälen einen großen Abstand zueinander aufweisen, so daß bei dem einen Kanal möglicherweise auftretende, störende Interferenzen durch Mehrfachreflexionen bei dem nächsten Kanal mit großer Sicherheit vermieden werden.

Das Netz 10 arbeitet mit einer Systemzeit, die aufeinanderfolgende Zeitschlitze definiert, wobei in jedem Zeitschlitz über den jeweils gültigen Kanal eine Datenübertragung zwischen der Zentralstation 11 sowie einer der Anwenderstationen 12, 13, 14, 15 erfolgt. In dem Zeitschlitz zur Zeit t = 0 wird z.B. über den Kanal 7 übertragen, während in dem Zeitschlitz t = 77 über den Kanal 54 übertragen wird.

Das Frequenzsprungmuster 21 wird zyklisch durchlaufen, so daß sich an den Zeitschlitz t = 79 wieder der Zeitschlitz t = 0 anschließt. Für welche Anwenderstation 12, 13, 14 oder 15 eine Sendung der Zentralstation 11 bestimmt ist, ergibt sich aus einer Adresse, die die Zentralstation 11 dem in dem jeweiligen Zeitschlitz zu übersendenden Datenpaket voranstellt. Mit anderen Worten, während die Systemzeit über den Zeitschlitz den jeweils zu verwendenden Kanal bestimmt, gibt die Zentralstation 11 bei der Datenübertragung den Adressaten an. Ferner wird während dieser Datenübertragung mitgeteilt, welche Anwenderstation 12, 13, 14, 15 in dem nächsten Zeitschlitz die Sendeberechtigung erhält. Der Kanal des nächsten Zeitschlitzes ergibt sich dabei aus dem Frequenzsprungmuster 21 aus Fig. 2.

Zusätzlich zu ihren jeweiligen Datenpaketen übermitteln die Anwenderstationen 12, 13, 14, 15 der Zentralstation 11 auch eine Information über die Zahl der noch zu übertragenden Datenpakete, so daß die Zentralstation 11 die Sendeberechtigung lastabhängig vergeben kann. Damit durch eine Anwenderstation 12, 13, 14, 15 mit hohem Datenaufkommen die anderen Anwenderstationen 13, 14, 15, 12 nicht völlig von der Übertragung ausgeschlossen werden, wird die Sendeberechtigung nicht allein aufgrund des Datenaufkommens sondern ebenfalls danach vergeben, wieviel Zeit seit der letzten Datenübertragung der jeweiligen Anwenderstation 13, 14, 15, 12 verstrichen ist.

Das Netz 10 ermöglicht damit eine asynchrone, lastabhängige Übertragung von Datenpaketen, wobei der Datendurchsatz durch die hierarchische Vergabe von Sendeberechtigungen optimiert wird.

Das insoweit beschriebene Netz 10 arbeitet jedoch nicht in einem exklusiven Frequenzbereich, es ist vielmehr ein Zusatznetz, das sich einem bestehenden Netz überlagert, wie es jetzt anhand der Fig. 3 beschrieben werden soll.

Fig. 3 zeigt in schematischer Weise ein von Primärnutzern genutztes Frequenzspektrum 23, das auch von den Anwenderstationen des Netzes aus Fig. 1 in einer Art "Zusatznetz" genutzt wird. Das Frequenzspektrum umfaßt beispielhaft f(k) Kanäle f₁ bis f₈₀, wobei bei f₁₀ und f₅₀ jeweils ein Primärnutzer 24, 25 sendet, während bei f₆₀ die Anwenderstation 13 zu finden ist. Das Zusatznetz arbeitet also gerade bei der Systemzeit t = 3.

Neben den sehr schmalbandigen Primärnutzern 24, 25 sowie der Anwenderstation 13 ist noch ein weiterer Primärnutzer 26 vorhanden, dessen Mittenfrequenz bei f₂₅ liegt. Dieser Primärnutzer 26 ist jedoch sehr breitbandig und weist eine spektrale Glockenkurve 27 auf, die sich von f₂₀ bis zu f₃₀ erstreckt. In den Randbereichen dieser Glockenkurve, also oberhalb von f₂₀ und unterhalb von f₃₀ ist die Sendeenergie S des Primärnutzers 26 jedoch so gering, daß sie unterhalb einer detektierbaren Schwelle W liegt, so daß eine Anwenderstation z. B. auf den Kanälen f₂₁ sowie f₂₉ kein Signal empfangen könnte und diesen Kanal daher als frei ansehen würde.

Wie bereits erwähnt, verwenden die Anwenderstationen die Kanäle f₁ bis f₈₀ zur Datenübertragung nach Art der Frequenzsprungtechnik, wobei zur Vermeidung von Störungen der Primärnutzer zu Beginn einer jeden möglichen Datenübertragung überprüft wird, ob der jeweils gerade ausgewählte Frequenzkanal von Primärnutzern belegt ist. Das grundlegende Verfahren wird ausführlich in der eingangs erwähnten DE 44 07 544 A1 beschrieben, so daß auf weitere Erläuterungen hier verzichtet werden kann.

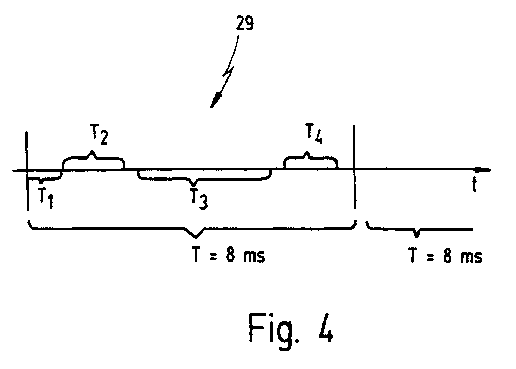

Zu jedem Zeitpunkt weiß somit eine sendende bzw. empfangende Anwenderstation, über welchen Kanal diese Sendung zu erfolgen hat. Damit diese mögliche Sendung nicht einen Primärnutzer stört, wird vor der Aussendung eines Datenpaketes in dem jeweiligen Zeitschlitz überprüft, ob der ausgewählte Kanal gerade von einem Primärnutzer belegt wird. Die hierzu erforderlichen einzelnen Operationen werden jetzt anhand der schematischen Darstellung der Fig. 4 erörtert.

Fig. 4 zeigt auf der Zeitachse einen schematisch angedeuteten Zeitschlitz 29 von T = 8 ms. Zu Beginn dieses Zeitschlitzes 29 wird zunächst der Sender der Anwenderstation auf den ausgewählten Kanal eingestellt, was während der Zeit T₁ = 50 ns erfolgt.

Daraufhin wird während der Zeit T₂ = 500 *µ*s dieser Kanal auf Belegung abgefragt. Wenn der Kanal frei ist, so wird während der Zeit T₃, die sich an T₂ anschließt, wenn auch nicht unmittelbar, ein Datenpaket übertragen, wozu 4 ms zur Verfügung stehen. Dieses Datenpaket besteht in bekannter Weise aus einem Header, einem Datenpaket sowie einem Trailer.

Nach der Übertragung des Datenpaketes wird bei T₄ noch eine gewisse Zeit gewartet, ob der Empfänger den Empfang des Datenpaketes bestätigt. Sofern diese Bestätigung eingeht, wird in dem nächsten Zeitschlitz das nächste Datenpaket übertragen, bleibt die Bestätigung aus, wird dasselbe Datenpaket in dem nächsten Zeitschlitz noch einmal übertragen.

Wenn bei der Überprüfung in T₂ erkannt wird, daß der ausgewählte Kanal bereits durch Primärnutzer belegt ist, verstreicht der Rest der Zeit des Zeitschlitzes ungenutzt, und zu Beginn des nächsten Zeitschlitzes beginnen die soeben beschriebenen Operationen von vorne.

Das insoweit beschriebene Netz 10 aus Fig. 1 ist in der Lage, sich an unterschiedliche Lastzustände anzupassen, was durch eine asynchrone Übertragung von Datenpaketen mit lastabhängiger Zuweisung der Sendeberechtigung durch die Zentralstation 11 erreicht wird. Da die Datenpakete zeitlich asynchron übertragen werden, ist eine Sprachübertragung zunächst nicht möglich, da es hier zu Stottereffekten kommt, weil die zeitlichen Abständen, in denen die Datenpakete übertragen werden, je nach Lastzustand des Netzes stark variieren können.

Dem kann jedoch zum einen dadurch abgeholfen werden, daß die Zentralstation 11 einer Anwenderstation 12, 13, 14, 15 die Sprache übertragen muß, ein festes Zeitraster von periodisch angeordneten Zeitschlitzen zuweist, in denen sie Sprache übertragen kann. Die anderen Zeitschlitze werden weiterhin dynamisch, in Abhängigkeit von dem Datenaufkommen auf die Anwenderstationen verteilt.

Die fest vorgegebenen Zeitschlitze werden von der Sprache übertragenden Anwenderstation jedoch unter Umständen gar nicht immer benötigt, so daß diese Zeitschlitze ggf. für die Datenübertragung noch verloren gehen. In Sprachpausen sendet nämlich die Anwenderstation nicht, so daß andere, asynchrone Daten übertragen werden könnten. Die Zentralstation 11 hat jedoch keine Informationen über diesen Sachverhalt vorliegen, so daß der Zeitschlitz ungenutzt verstreicht.

Selbstverständlich ist es möglich, durch Austausch entsprechender Informationen zwischen der Zentralstation 11 und der jeweiligen Anwenderstation 12, 13, 14, 15 dafür Sorge zu tragen, daß ein solcher ungenutzter Zeitschlitz doch für asynchrone Datenübertragung zur Verfügung steht, der dafür erforderliche Aufwand bezüglich der Abstimmung kann jedoch insbesondere dann sehr groß werden, wenn der gesamte Datendurchsatz durch das Netz sehr hoch ist, so daß die Zentralstation 11 einen großen Teil der zur Verfügung stehenden Rechenzeit für den Datenverkehr aufwenden muß.

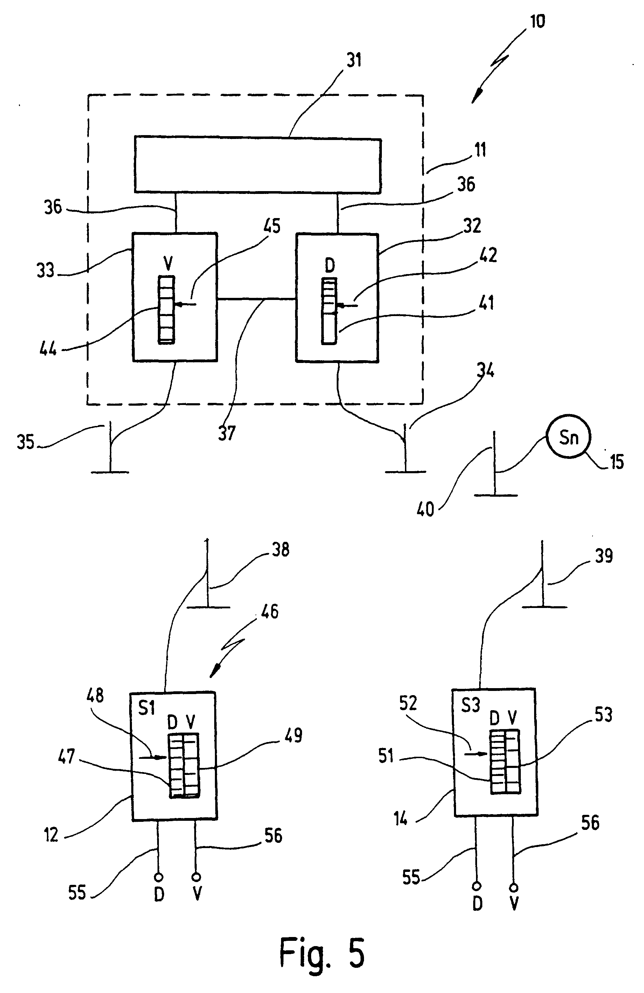

Aus diesem Grund wird in einer alternativen Ausgestaltung der Erfindung zwischen den Anwenderstationen 11, 12, 13, 14, 15 des Netzes 10 aus Fig. 5 ein weiteres synchrones Datennetz aufgespannt, das einem Frequenzsprungmuster folgt, das zu dem Frequenzsprungmuster für die asynchrone Datenübertragung orthogonal ist. Dies wird dadurch erreicht, daß sowohl die Zentralstation 11 als auch die Anwenderstation 12, 13, 14, 15 beide Frequenzsprungmuster abarbeiten, wie es jetzt anhand der Fig. 5 beschrieben werden soll.

Die Zentralstation 11 weist eine Steuereinheit 31 sowie zwei Sende-/Empfangsteile 32 und 33 auf. Jedem Sende-/Empfangsteil 32, 33 ist eine Sende- und Empfangsantenne 34 bzw. 35 zugeordnet. Über Datenleitungen 36 sind die Sende-/Empfangsteile 32 und 33 mit der Steuereinheit 31 sowie über eine Steuerleitung 37 miteinander verbunden. Die Zentralstation 11 kann auch zwei Zentralstationen von dem Typ umfassen, der zum Betrieb eines Netzes vorgesehen ist, das nur ein Frequenzsprungmuster abarbeitet.

Die Anwenderstationen, von denen in Fig. 5 die Stationen 12, 14 und 15 gezeigt sind, weisen ebenfalls Sende- und Empfangsantennen 38, 39, 40 auf, über die sie mit der Zentralstation 11 kommunizieren.

Der Sende-/Empfangsteil 32 der Zentralstation 11 verwaltet ein Frequenzsprungmuster 41 über einen Zeiger 42, der von der dem Netz 10 gemeinsamen Systemzeit gesteuert einen Zeitschlitz nach dem anderen anfährt, woraufhin sich dann der Sende-/Empfangsteil 32 auf den Kanal einstellt, der in dem Frequenzsprungmuster 41 dem gerade aktuellen Zeitschlitz zugeordnet ist, und ein Datenpaket überträgt, wenn der Kanal nicht von einem Primärnutzer belegt ist. Diese Operation wird im folgenden mit "Abarbeiten eines Frequenzsprungmusters" bezeichnet.

Auf entsprechende Weise arbeitet der Sende-/Empfangsteil 33 ein Frequenzsprungmuster 44 mit Hilfe eines Zeigers 45 ab.

Während das Frequenzsprungmuster 41 so für asynchrone Datenübertragung verwendet wird, wie es im Zusammenhang mit dem Frequenzsprungmuster 21 aus Fig. 2 bereits beschrieben wurde, dient das Frequenzsprungmuster 44 in noch zu beschreibender Weise zur synchronen Datenübertragung, bspw. zur Sprachübertragung.

Die Anwenderstation 12 (S1) arbeitet mit ihrem Sende-/Empfangsteil 46 ein Frequenzsprungmuster 47 mit Hilfe eines Zeigers 48 ab. Dieses Frequenzsprungmuster 47 ist dem asynchronen Frequenzsprungmuster 41 der Zentralstation zugeordnet. Ferner arbeitet die Anwenderstation 12 in noch zu beschreibender Weise ein Frequenzsprungmuster 49 ab, das dem asynchronen Frequenzsprungmuster 44 der Zentralstation 11 zugeordnet ist.

In gleicher Weise umfaßt auch die Anwenderstation 14 ein asynchrones Frequenzsprungmuster 51, das über einen Zeiger 52 abgearbeitet wird, sowie ein synchrones Frequenzsprungmuster 53.

Beide Anwenderstationen 12, 14 sind mit einem Off-Line-Datenanschluß 55 sowie mit einem On-Line-Sprachanschluß 56 versehen.

Die Frequenzsprungmuster 41, 47, 51 sind zueinander identisch, wobei die Zeiger 42, 48, 52 synchron zueinander von Zeitschlitz zu Zeitschlitz fortschreiten. Damit ist für jeden Zeitschlitz genau definiert, über welchen Kanal die Zentralstation 11 sowie die Anwenderstationen 12, 14 miteinander kommunizieren können. Welche Anwenderstation 12 oder 14 nun tatsächlich eine Sendeberechtigung erhält bzw. von der Zentralstation 11 angesprochen wird, entscheidet die Zentralstation 11 lastabhängig.

Auch die Frequenzsprungmuster 44, 49 und 53 sind zueinander identisch, die Vergabe der Sendeberechtigung ist jedoch statisch. Das bedeutet, daß zu einem ganz bestimmten Zeitschlitz nur eine ganz bestimmte Anwenderstation über den sich aus dem Frequenzsprungmuster 44, 49, 53 ergebenden Kanal senden bzw. empfangen kann. Solange die Anwenderstation 12 bzw. 14 jedoch keinen Sende-/Empfangsbedarf hat, arbeitet sie das asynchrone Frequenzsprungmuster 41, 47, 51 ab. Erst wenn auf ihrem Anschluß 56 Daten anstehen oder aber die Zentralstation 11 über einen Kanal aus dem ersten Frequenzsprungmuster mitgeteilt hat, daß Sprachdaten zu empfangen sind, schaltet die jeweilige Anwenderstation 12 oder 14 jeweils nur zu den zugewiesenen Zeitschlitzen auf das zweite Frequenzsprungmuster um.

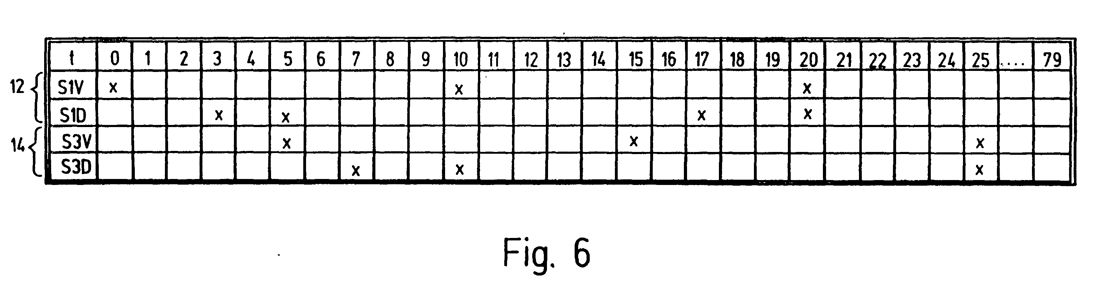

Wie dies erfolgt, soll jetzt anhand der Fig. 6 gezeigt werden.

In Fig. 6 sind in der oberen zeile einige der Zeitschlitze t dargestellt. In den folgenden zeilen sind das Frequenzsprungmuster für Sprachübertragung der Anwenderstation 12 (S1V), das Frequenzsprungmuster für asynchrone Datenübertragung der Anwenderstation 12 (S1D), das Frequenzsprungmuster für Sprachübertragung der Anwenderstation 14 (S3V) sowie das Frequenzsprungmuster für asynchrone Datenübertragung der Anwenderstation 14 (S3D) dargestellt. Der Übersichtlichkeit halber wurde darauf verzichtet, die einzelnen Kanäle anzugeben, die in den jeweiligen Zeitschlitzen der Frequenzsprungmuster zu finden sind, es ist lediglich durch ein Kreuz angedeutet, welche Anwenderstation in dem jeweiligen Zeitschlitz über welches Frequenzsprungmuster sendeberechtigt ist.

Es ist zu erkennen, daß die Frequenzsprungmuster S1V und S3V die Sendeberechtigung in äquidistanten Abständen vergeben. Die Anwenderstation 12 kann z.B. Sprache in den Zeitschlitzen 0, 10, 20 ... übertragen, während die Anwenderstation 14 (S3V) in den Zeitschlitzen 5, 15, 25...Sprache übertragen kann. Die äquidistanten Abstände können je nach Anforderung auch anders vergeben werden, wobei diese Vergabe entweder bei der Konfiguration des Netzes erfolgt, oder aber dynamisch im Betrieb geändert werden kann.

Die Frequenzschlitze in den asynchronen Frequenzsprungmustern S1D und S3D sind lastabhängig verteilt und willkürlich angenommen.

Im Zeitschlitz t = 0 überträgt somit die Anwenderstation 12 Sprache, während die Anwenderstation 14 im Zeitschlitz t = 5 Sprache überträgt. Für diesen Zeitschlitz weist die Anwenderstation 12 eine Sendeberechtigung in dem asynchronen Frequenzsprungmuster S1D auf. Das bedeutet, daß zum Zeitschlitz t = 5 die Anwenderstation 12 Daten und die Anwenderstation 14 Sprache zu der Zentralstation 11 überträgt. Die Zentralstation 11 empfängt mit ihren beiden Sende-/Empfangsteilen 32, 33 beide Datenpakete, arbeitet in der Steuereinheit 31 jedoch nur das synchrone Datenpaket ab, da dieses Vorrang hat. Am Ende dieses Zeitschlitzes t = 5 bestätigt die Zentralstation der Anwenderstation 14 den Empfang des Sprach-Datenpaketes, während die Anwenderstation 12 ohne Bestätigung bleibt, so daß sie in dem Zeitschlitz 17 das asynchrone Datenpaket erneut aussendet. Eine ähnliche Kollision tritt im Zeitschlitz t = 10 auf, wo die Sprachübertragung der Anwenderstation 12 vor der Datenübertragung der Anwenderstation 14 Vorrang hat.

Im Zeitschlitz t = 20 weist die Anwenderstation 12 sowohl eine Sendeberechtigung für Sprache als auch eine Sendeberechtigung für Daten auf. Wenn kein Sprachverkehr abgewickelt werden muß, wird die Anwenderstation 12 asynchrone Daten übertragen, im anderen Fall jedoch synchrone Sprachdaten. Ein ähnlicher Zustand findet sich auch noch im Zeitschlitz t = 25.

Die Zeitschlitze aus Fig. 6, die ohne Kreuze geblieben sind, sind anderen Anwenderstationen zugeordnet, die in dieser Figur der Übersichtlichkeit halber nicht gezeigt sind.

Selbstverständlich arbeiten die Anwenderstationen 12, 14 die Frequenzsprungmuster S1V bzw. S3V nur dann ab, wenn auch tatsächlich eine synchrone Datenübertragung erforderlich ist, ansonsten wird auf das Umschalten in das Frequenzsprungmuster für synchrone Datenübertragung verzichtet.

## Patentansprüche

1. Verfahren zum Übertragen von Datenpaketen in einem Netz (10) von Anwenderstationen (12, 13, 14, 15), wobei die Datenpakete über einen Satz von Kanälen im Frequenzsprungverfahren übertragen und die Kanäle dabei nach einem Frequenzsprungmuster (21; S1V, S1D, S3V, S3D) in zeitlich nacheinander folgenden Zeitschlitzen (t) zur Datenübertragung ausgewählt werden, und einer Anwenderstation (12, 13, 14, 15) Zeitschlitze (t) nach Bedarf zugeordnet werden, in denen sie sendeberechtigt ist, **dadurch gekennzeichnet**, daß in einem ersten Frequenzsprungmuster (S1D, S3D) Datenpakete nach Bedarf und zumindest in einem zu dem ersten Frequenzsprungmuster (S1D, S3D) orthogonalen zweiten Frequenzsprungmuster (S1V, S3V) Datenpakete in einem vorgebbaren Zeitraster synchron in dem Netz (10) übertragen werden, und daß jede Anwenderstation (12, 13, 14, 15) einen Sende-/Empfangsteil aufweist, der wahlweise auf einen Kanal aus dem ersten oder zweiten Frequenzsprungmuster (21; S1V, S1D, S3V, S3D) eingestellt wird.

2. Verfahren nach Anspruch 1, dadurch gekennzeichnet, daß der Satz von Kanälen in einem Frequenzband liegt, das von Primärnutzern (24, 25, 26) verwendet wird, wobei ein von dem Netz (10) von Anwenderstationen (12, 13, 14, 15), jeweils ausgewählter Kanal vor einer möglichen Datenübertragung daraufhin überprüft wird, ob ein Primärnutzer (24, 25, 26) diesen Kanal z. Zt. belegt, und in Abhängigkeit von dieser Überprüfung entweder ein Datenpaket über den ausgewählten Kanal übertragen oder aber der in dem jeweiligen Frequenzsprungmuster (21; S1V, S1D, S3V, S3D) nächste Kanal zur Überprüfung und möglichen Datenübertragung ausgewählt wird.

3. Verfahren nach Anspruch 1 oder 2, dadurch gekennzeichnet, daß die Zeitschlitze (t) des ersten Frequenzsprungmusters (S1D, S3D) den Anwenderstationen (12, 13, 14, 15) dynamisch in Abhängigkeit von deren Datenaufkommen zugewiesen werden.

4. Verfahren nach einem der Ansprüche 1 bis 3, dadurch gekennzeichnet, daß das Netz (10) von Anwenderstationen (12,13, 14, 15) eine gemeinsame Systemzeit (t) aufweist und beide Frequenzsprungmuster (21; S1V, S1D, S3V, S3D) zyklisch und zeitgleich so abarbeitet, daß in einem bestimmten Zeitschlitz (t) je ein Kanal aus dem ersten und zweiten Frequenzsprungmuster(21; S1V, S1D, S3V, S3D) zur Datenübertragung zur Verfügung steht.

5. Verfahren nach einem der Ansprüche 1 bis 4, dadurch gekennzeichnet, daß jeder Anwenderstation (12, 13, 14, 15) feste, periodisch angeordnete Zeitschlitze (t) in dem zweiten Frequenzsprungmuster (S1V, S3V) zugewiesen sind.

6. Verfahren nach einem der Ansprüche 1 bis 4, dadurch gekennzeichnet, daß einer Anwenderstation (12, 13, 14, 15) bei Bedarf ein Satz fester, periodisch angeordneter Zeitschlitze (t) in dem zweiten Frequenzsprungmuster (S1V, S3V) zugewiesen wird.

7. Verfahren nach einem der Ansprüche 1 bis 6, dadurch gekennzeichnet, daß eine Anwenderstation eine Zentralstation (11) ist, die zwei Sende-/Empfangsteile (32, 33) aufweist, von denen in einem bestimmten Zeitschlitz (t) der eine auf den zugeordneten Kanal des ersten Frequenzsprungmusters (S1D, S3D) und der andere auf den zugeordneten Kanal des zweiten Frequenzsprungmusters (S1V, S3V) eingestellt wird.

8. Verfahren nach einem der Ansprüche 1 bis 7, dadurch gekennzeichnet, daß die Anwenderstation (12, 13, 14, 15) dem ersten Frequenzsprungmuster (S1D, S3D) folgt und nur bei eigener Sendeberechtigung auf das zweite Frequenzsprungmuster (S1V, S3V) umschaltet.

9. Verfahren nach Anspruch 8, dadurch gekennzeichnet, daß die Anwenderstation ( 12 , 13 , 14 , 15 ) nur dann auf das zweite Frequenzsprungmuster (S1V, S3V) umschaltet, wenn für sie eine synchrone Datenübertragung ansteht.

10. Verfahren nach Anspruch 9, dadurch gekennzeichnet, daß die Zentralstation (11) der Anwenderstation (12, 13, 14, 15) eine synchrone Datenübertragung über einen Kanal aus dem ersten Frequenzsprungmuster (S1D, S3D) ankündigt.

11. Zentralstation für ein Datenpakete übertragendes Netz (10) von Anwenderstationen (12, 13, 14, 15), wobei die Datenpakete über einen Satz von Kanälen im Frequenzsprungverfahren übertragen und die Kanäle dabei nach einem Frequenzsprungmuster (21; 41, 44) zeitlich nacheinander zur Datenübertragung ausgewählt werden, wobei die Zentralstation (11) ein erstes Sende-/Empfangsteil (32) aufweist, das ein erstes Frequenzsprungmuster (41) abarbeitet, um Datenpakete lastabhängig zu und von den Anwenderstationen (12, 13, 14, 15) zu übertragen, dadurch gekennzeichnet, daß die Zentralsation (11) ein zweites Sende-/Empfangsteil (33) aufweist, das etwa zeitgleich ein zu dem ersten orthogonales zweites Frequenzsprungmuster (44) abarbeitet, um Datenpakete in einem vorgebbaren Zeitraster zu übertragen.

12. Zentralstation nach Anspruch 11, dadurch gekennzeichnet, daß sie dazu eingerichtet ist, Datenpakete über einen Satz von Kanälen zu übertragen, der in einem Frequenzband liegt, das von Primärnutzern (24, 25, 26) verwendet wird, wobei ein von dem Netz (10) von Anwenderstationen (12, 13, 14, 15) jeweils ausgewählter Kanal vor einer möglichen Datenübertragung daraufhin überprüft wird, ob ein Primärnutzer (24, 25, 26) diesen Kanal zur Zeit belegt, und in Abhängigkeit von dieser Überprüfung entweder ein Datenpaket über den ausgewählten Kanal übertragen oder aber der in dem jeweiligen Frequenzsprungmuster (21; 41, 44) nächste Kanal zur Überprüfung und möglichen Datenübertragung ausgewählt wird.

13. Anwenderstation für ein Datenpakete übertragendes Netz (10) von derartigen Anwenderstationen (12, 13, 14, 15), wobei die Datenpakete über einen Satz von Kanälen im Frequenzsprungverfahren übertragen und die Kanäle dabei nach einem Frequenzsprungmuster zeitlich nacheinander zur Datenübertragung ausgewählt werden, dadurch gekennzeichnet, daß die Anwenderstation ( 12 , 13 , 14 , 15 ) dazu eingerichtet ist, zwei Frequenzsprungmuster (47, 51; 49, 53) zu speichern und wahlweise aufzurufen, um ein Datenpaket zu übertragen, wobei in dem ersten Frequenzsprungmuster (47, 51) Datenpakete nach Vorgabe einer Zentralstation (11) lastabhängig übertragen werden und in dem zu dem ersten orthogonalen zweiten Frequenzsprungmuster (49, 53) Datenpakete in einem vorgebbaren Zeitraster übertragen werden.

14. Anwenderstation nach Anspruch 13, dadurch gekennzeichnet, daß sie dazu eingerichtet ist, Datenpakete über einen Satz von Kanälen zu übertragen, der in einem Frequenzband liegt, das von Primärnutzern (24, 25, 26) verwendet wird, wobei ein von dem Netz (10) von Anwenderstationen (12, 13, 14, 15) jeweils ausgewählter Kanal vor einer möglichen Datenübertragung daraufhin überprüft wird, ob ein Primärnutzer (24, 25, 26) diesen Kanal zur Zeit belegt, und in Abhängigkeit von dieser Überprüfung entweder ein Datenpaket über den ausgewählten Kanal übertragen oder aber der in dem jeweiligen Frequenzsprungmuster (21; 47, 51; 49, 53) nächste Kanal zur Überprüfung und möglichen Datenübertragung ausgewählt wird.

## Claims

1. Process for transmitting data packets in a network (10) of user stations (12, 13, 14, 15), wherein the data packets are transmitted via a set of channels in the frequency hopping process and the channels are selected in this process for data transmission according to a frequency hopping pattern (21; S1V, S1D, S3V, S3D) in time slots (t) following one another in time sequence, and time slots (t) are allocated as necessary to a user station (12, 13, 14, 15), in which it is authorised to transmit, characterised in that in a first frequency hopping pattern (S1D, S3D) data packets are transmitted as necessary in a presettable time grid synchronously in the network (10) and at least in a second frequency hopping pattern (S1V, S3V) orthogonal to the first frequency hopping pattern (S1D, S3D), and in that each user station (12, 13, 14, 15) has a transmitter/receiver part which can be adjusted as desired to a channel from the first or second frequency hopping pattern (21; S1V, S1D, S3V, S3D).

2. Process according to claim 1, characterised in that the set of channels is in a frequency band that is used by primary users (24, 25, 26), wherein one channel selected, in each case, from the network (10) of user stations (12, 13, 14, 15), prior to a possible data transmission, is checked for whether a primary user (24, 25, 26) is currently occupying this channel, and depending on this check, either a data packet is transmitted via the selected channel or else the next channel in the respective frequency hopping pattern (21; S1V, S1D, S3V, S3D) is selected for checking and possible data transfer.

3. Process according to claim 1 or 2, characterised in that the time slot (t) of the first frequency hopping pattern (S1D, S3D) is allocated to the user stations (12, 13, 14, 15), dynamically depending on their data supply.

4. Process according to any one of claims 1 to 3, characterised in that the network (10) of user stations (12, 13, 14, 15) has a common system time (t) and both frequency hopping patterns (21, S1V, S1D, S3V, S3D) are serviced cyclically and synchronously in such a way that one channel from the first and second frequency hopping pattern (21; S1V, S1D, S3V, S3D) is always available for data transmission in a specific time slot (t).

5. Process according to any one of claims 1 to 4, characterised in that fixed, periodically arranged time slots (t) in the second frequency hopping pattern (S1V, S3V) are allocated to each user station (12, 13, 14, 15).

6. Process according to any one of claims 1 to 4, characterised in that a set of fixed, periodically arranged time slots (t) in the second frequency hopping pattern (S1V, S3V) are allocated as necessary to a user station (12, 13, 14, 15).

7. Process according to any one of claims 1 to 6, characterised in that a user station is a central station (11) which has two transmitter/receiver parts (32, 33), of which, in a specific time slot (t), the one is adjusted to the allocated channel of the first frequency hopping pattern (S1D, S3D) and the other to the allocated channel of the second frequency hopping pattern (S1V, S3V).

8. Process according to any one of claims 1 to 7, characterised in that the user station (12, 13, 14, 15) follows the first frequency hopping pattern (S1D, S3D) and only switches to the second frequency hopping pattern (S1V, S3V) on its own transmission authorisation.

9. Process according to claim 8, characterised in that the user station (12, 13, 14, 15) only switches to the second frequency hopping pattern (S1V, S3V) if synchronous data transmission is waiting for it.

10. Process according to claim 9, characterised in that the central station (11) of the user station (12, 13, 14, 15) signals a synchronous data transmission via a channel from the first frequency hopping pattern (S1D, S3D).

11. Central station for a network (10) of user stations (12, 13, 14, 15) transmitting data packets, wherein the data packets transmit via a set of channels in the frequency hopping process and the channels are selected for data transmission one after the other in time sequence according to a frequency hopping pattern (21; 41, 44), wherein the central station (11) has a first transmitter/receiver part (32) which services a first frequency hopping pattern (41) to transmit data packets to and from the user stations (12, 13, 14, 15) depending on load, characterised in that the central station (11) has a second transmitter/receiver part (33) which approximately synchronously services a second frequency hopping pattern (44) orthogonal to the first to transmit data packets in a presettable time grid.

12. Central station according to claim 11, characterised in that it is equipped to transmit data packets via a set of channels which is in a frequency band which is used by primary users (24, 25, 26), wherein a channel selected, in each case, from the network (10) of user stations (12, 13, 14, 15) is checked before a possible data transmission as to whether a primary user (24, 25, 26) is currently occupying this channel, and, depending on this check, either a data packet is transmitted via the selected channel or else the next channel in the respective frequency hopping pattern (21; 41, 44) is chosen for checking and possible data transfer.

13. User station for a network (10) of user stations (12, 13, 14, 15) transmitting data packets, wherein the data packets are transmitted via a set of channels in the frequency hopping process and the channels are selected in this process for data transmission one after the other in time sequence according to a frequency hopping pattern, characterised in that the user station (12, 13, 14, 15) is equipped to store and to call in as desired two frequency hopping patterns (47, 51; 49, 53) to transmit a data packet, wherein in the first frequency hopping pattern (47, 51), data packets are transmitted, depending on load, according to the requirement of a central station (11) and in the second frequency hopping pattern (49, 53) orthogonal to the first, data packets are transmitted in a presettable time grid.

14. User station according to claim 13, characterised in that it is equipped to transmit data packets via a set of channels which is in a frequency band which is used by primary users (24, 25, 26), wherein a channel selected, in each case from the network (10) of user stations (12, 13, 14, 15) is checked before a possible data transmission as to whether a primary user (24, 25, 26) is currently occupying this channel, and, depending on this check, either a data packet is transmitted via the selected channel or else the next channel in the respective frequency hopping pattern (21; 47, 51; 49, 53) is selected for checking and possible data transfer.

## Revendications

1. Procédé pour transmettre des paquets de données dans un réseau (10) de stations utilisatrices (12, 13, 14, 15), dans lequel les paquets de données sont transmis sur un jeu de canaux dans le procédé du saut de fréquence et les canaux sont alors sélectionnés pour la transmission de données selon un schéma de saut de fréquence (21 ; S1V, S1D, S3V, S3D) dans des fentes de temps (t) de transmission de données qui se succèdent dans le temps et, à une station utilisatrice (12, 13, 14, 15) sont attribuées, en fonction des besoins, des fentes de temps (t), dans lesquelles elle est autorisée à émettre, caractérisé en ce que des paqucts de données sont transmis selon le besoin dans un premier schéma de saut de fréquence (S1D, S3D) et des paquets de données sont transmis dans un mode synchrone dans le réseau (10) dans une trame temporelle pouvant être prédéterminée, dans un deuxième schéma de saut de fréquence (S1V, S3V) orthogonal au premier schéma de saut de fréquence (S1d, S3d) et en ce que chaque station utilisatrice (12, 13, 14, 15) présente une partie d'émission/réception qui est réglée au choix sur un canal pris dans le premier ou dans le deuxième schéma de saut de fréquence (21 ; S1V, S1D, S3V, S3D).

2. Procédé selon la revendication 1, caractérisé en ce que le jeu de canaux se trouve dans une bande de fréquence qui est utilisée par des utilisateurs primaires (24, 25, 26), cependant qu'un canal sélectionné par le réseau (10) de stations utilisatrices (12, 13, 14, 15) à un moment donné est contrôlé avant une transmission de données possible pour savoir si un utilisateur primaire (24, 25, 26) occupe ce canal à ce moment et, en fonction de ce contrôle, soit un paquet de données est transmis par le canal sélectionné, soit le canal suivant du schéma de saut de fréquence considéré (21 ; S1V, S1D, S3V, S3D) est sélectionné pour le contrôle et pour la transmission éventuelle de données.

3. Procédé selon la revendication 1 ou 2, caractérisé en ce que les fentes de temps (t) du premier schéma de saut de fréquence (S1d, S3d) sont attribuées aux stations utilisatrices (12, 13, 14, 15) dans un mode dynamique en fonction de leur somme de données.

4. Procédé selon une des revendications 1 à 3, caractérisé en ce que le réseau (10) de stations utilisatrices (12, 13, 14, 15) présente un temps de système commun (t) et les deux schémas de saut de fréquence (21 ; S1V, S1D, S3V, S3D) sont traités cycliquement et simultanément de telle manière que, dans un saut de fréquence déterminé (t), un canal pris dans le premier ou dans le deuxième schéma de saut de fréquence (21 ; S1V, S1D, S3V, S3D) est disponible pour la transmission de données.

5. Procédé selon une des revendications 1 à 4, caractérisé en ce qu'à chaque station utilisatrice (12, 13, 14, 15), sont attribuées des fentes de temps (t) fixes, disposées périodiquement, contenues dans le deuxième schéma de saut de fréquence (S1V, S3V).

6. Procédé selon une des revendications 1 à 4, caractérisé en ce qu'au besoin, un jeu de fentes de temps fixes (t) disposées périodiquement, sont attribuées à une station utilisatrice (12, 13, 14, 15) dans le deuxième schéma de saut de fréquence (S1V, S3V).

7. Procédé selon une des revendications là 6, caractérisé en ce qu'une station utilisatrice est une station centrale (11) qui présente deux parties d'émission/réception (32, 33) parmi lesquelles, dans une fente de temps déterminée (t), l'une est réglée sur le canal correspondant du premier schéma de saut de fréquence (S1D, S3D) et l'autre sur le canal correspondant du deuxième schéma de saut de fréquence (S1V, S3V).

8. Procédé selon une des revendications 1 à 7, caractérisé en ce que la station utilisatrice (12, 13, 14, 15) suit le premier schéma de saut de fréquence (S1D, S3D) et ne bascule sur le deuxième schéma de saut de fréquence (S1V, S3V) qu'en réponse à une autorisation d'émission qui lui est attribuée.

9. Procédé selon la revendication 8, caractérisé en ce que la station utilisatrice (12, 13, 14, 15) ne bascule sur le deuxième schéma de saut de fréquence (S1V, S3V) que lorsqu'il y a une transmission de données synchrone pour elle.

10. Procédé selon la revendication 9, caractérisé en ce que la station centrale (11) annonce à la station utilisatrice (12, 13, 14, 15) une transmission de données synchrone sur un canal pris dans le premier schéma de saut de fréquence (S1D, S3D).

11. Station centrale pour un réseau (10) de stations utilisatrices (12, 13, 14, 15) qui transmet des paquets de données, dans laquelle des paquets de données sont transmis sur un jeu de canaux dans le procédé du saut de fréquence et les canaux sont sélectionnés l'un après l'autre dans le temps pour la transmission de données, selon un schéma de saut de fréquence (21 ; 41, 44) et dans laquelle la station centrale (11) présente une première partie d'émission/réception (32) qui traite un premier schéma de saut de fréquence (41) pour transmettre des paquets de données en fonction de la charge et en provenance des stations utilisatrices (12, 13, 14, 15), caractérisé en ce que la station centrale (11) présente une deuxième partie d'émission/réception (33) qui traite à peu prés simultanément un deuxième schéma de saut de fréquence (44) orthogonal au premier pour transmettre des paquets de données dans un trame temporelle pouvant être prédéterminée.

12. Station centrale selon la revendication 11, caractérisée en ce qu'elle est agencée pour transmettre des paquets de données sur un jeu de canaux qui se trouvent dans une bande de fréquence qui est utilisée par des utilisateurs primaires (24, 25, 26) cependant qu'un canal sélectionné au moment considéré par le réseau (10) de stations utilisatrices (12, 13, 14, 15) est contrôlé avant une transmission de données éventuelle pour savoir si un utilisateur primaire (24, 25, 26) occupe ce canal au moment considéré et, en fonction de ce contrôle, soit un paquet de données est transmis sur le canal sélectionné, soit le canal suivant dans le schéma de saut de fréquence considéré (21 ; 41, 44) est sélectionné pour le contrôle et la transmission de données éventuelle.

13. Station utilisatrice pour un réseau (10) de stations utilisatrices de ce genre (12, 13, 14, 15), qui transmet des paquets de données, dans laquelle les paquets de données sont transmis sur un jeu de canaux dans le procédé du saut de fréquence et les canaux sont alors sélectionnés l'un après l'autre dans le temps pour la transmission des données, selon un schéma de saut de fréquence, caractérisé en ce que la station utilisatrice (12, 13, 14, 15) est agencée pour mémoriser deux schémas de saut de fréquence (47, 51 ; 49, 53) et les appeler sélectivement pour transmettre un paquet de données, cependant que, dans le premier schéma de saut de fréquence (47, 51), des paquets de données sont transmis en fonction de la charge, d'après la prescription d'une station centrale (11), et que, dans le deuxième schéma de saut de fréquence (49, 53) orthogonal au premier, des paquets de données sont transmis dans une trame temporelle pouvant être prédéterminée.

14. Station utilisatrice selon la revendication 13, caractérisé en ce qu'elle est agencée pour transmettre des paquets de données sur un jeu de canaux qui se trouvent dans une bande de fréquence qui est utilisée par des utilisateurs primaires (24, 25, 26), cependant qu'un canal sélectionné par le réseau (10) de stations utilisatrices (12, 13, 14, 15) au moment considéré est contrôlé avant une transmission de données éventuelle pour savoir si un utilisateur primaire (2', 25, 26) occupe ce canal au moment considéré et, en fonction de ce contrôle, soit un paquet de données est transmis par le canal sélectionné, soit, le canal suivant dans le schéma de saut de fréquence considéré (21 ; 47, 51 ; 49, 53) est sélectionné pour le contrôle et la transmission éventuelle de données.
